(19) Europäisches Patentamt
European Patent Office
Office européen des brevets

(11) **EP 2 274 579 B1**

(12) **EUROPÄISCHE PATENTSCHRIFT**

(45) Veröffentlichungstag und Bekanntmachung des Hinweises auf die Patenterteilung:
**15.08.2018 Patentblatt 2018/33**

(21) Anmeldenummer: **09737945.7**

(22) Anmeldetag: **24.03.2009**

(51) Int Cl.:
***G01D 5/245*** *(2006.01)*  ***G01D 5/249*** *(2006.01)*
***G01D 5/347*** *(2006.01)*

(86) Internationale Anmeldenummer:
**PCT/EP2009/053437**

(87) Internationale Veröffentlichungsnummer:
**WO 2009/132901 (05.11.2009 Gazette 2009/45)**

(54) **POSITIONSMESSEINRICHTUNG**

POSITION MEASURING DEVICE

DISPOSITIF DE MESURE DE POSITION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **02.05.2008 DE 102008022027**

(43) Veröffentlichungstag der Anmeldung:
**19.01.2011 Patentblatt 2011/03**

(73) Patentinhaber: **Dr. Johannes Heidenhain GmbH**
**83301 Traunreut (DE)**

(72) Erfinder:
• **BRAASCH, Jan**
**83352 Altenmarkt (DE)**

• **HOLZAPFEL, Wolfgang**
**83119 Obing (DE)**
• **BENNER, Ulrich**
**83308 Trostberg (DE)**
• **BERNHARD, Robert**
**84518 Garching (DE)**
• **MAYER, Elmar**
**83365 Nußdorf (DE)**
• **SEICHTER, Martin**
**83379 Wonneberg (DE)**
• **EHGARTNER, Gabriele**
**83361 Kienberg (DE)**

(56) Entgegenhaltungen:
EP-A- 1 329 696   WO-A-00/06973
WO-A-02/01160   WO-A-02/084223

**Beschreibung**

Die Erfindung betrifft eine Positionsmesseinrichtung zur Positionsmessung gemäß dem Anspruch 1 sowie ein Verfahren zur Positionsmessung gemäß dem Anspruch 7.

Auf vielen Gebieten werden vermehrt absolute Positionsmesseinrichtungen eingesetzt, bei denen die absolute Positionsinformation aus einer Codespur mit in Messrichtung hintereinander angeordneten Codeelementen abgeleitet wird. Die Codeelemente sind dabei in pseudozufälliger Verteilung vorgesehen, so dass eine bestimmte Anzahl von aufeinanderfolgenden Codeelementen jeweils ein Bitmuster bildet. Bei der Verschiebung der Abtasteinrichtung gegenüber der Codespur um ein einziges Codeelement wird bereits ein neues Bitmuster gebildet und über den gesamten absolut zu erfassenden Messbereich steht eine Folge von unterschiedlichen Bitmustern zur Verfügung.

Ein derartiger sequentieller Code wird als Kettencode oder als Pseudo-Random-Code bezeichnet. Eine absolute Positionsmesseinrichtung mit einem derartigen sequentiellen Code ist in der WO 02/084223 A1 beschrieben.

Die Auflösung der mit dem absoluten Code generierte absolute Position ist für viele Anwendungen nicht fein genug. Um die Auflösung weiter zu steigern, ist vorgesehen, die absolute Positionsinformation mit einer Positionsinformation aus einer höher auflösenden inkrementalen Positionsmessung zu kombinieren. Diese Kombination kann aber nur sicher erfolgen, wenn die Auflösung der absoluten Positionsinformation zumindest eine Teilungsperiode der inkrementalen Positionsmessung eindeutig definieren kann. Um die geforderte Gesamtauflösung zu erreichen, werden deshalb neben dem absoluten Code mehrere Inkrementalteilungen unterschiedlicher Teilungsperioden angeordnet, wie in der DE 4123722 A1 dargestellt. Eine dieser Inkrementalteilungen weist eine Teilungsperiode entsprechend der Breite eines Codeelementes auf. Durch Interpolation des davon abgeleiteten analogen periodischen Abtastsignals und durch Anschluss an die absolute Positionsinformation des Codes und durch Anschluss an die hochauflösende Inkrementalteilung wird eine resultierende absolute Information mit der Auflösung entsprechend der hochauflösenden Inkrementalteilung gewonnen.

Es gibt bereits Vorschläge, aus dem absoluten Code selbst eine inkrementale Positionsinformation abzuleiten. So wird in der EP 1329696 A1 ein absoluter Code angegeben, mit dem einerseits eine absolute Positionsinformation sowie mehrere analoge gegeneinander phasenverschobene inkrementale Abtastsignale erzeugbar sind. Jedes Codeelement besteht aus zwei Teilfeldern, wobei eines dieser Teilfelder periodisch angeordnet ist. Zur eindeutgen Absolutbestimmung muss deshalb das andere der beider Teilfelder das Codeelement eindeutig codieren, weshalb der Code insgesamt aus drei unterschiedlichen Teilfeldern besteht. Zur Generierung der analogen periodischen Abtastsignale werden jeweils gleichphasige Abtastsignale mehrerer Codeelemente aufsummiert.

Nachteilig dabei ist, dass aufgrund der periodischen Anordnung von Teilfeldern ein dritter Zustand zur Codierung der Codeelemente erforderlich ist.

In der WO 02/01160 A1, von der unsere Erfindung ausgeht, ist eine Positionsmesseinrichtung beschrieben, bei der die inkrementale Positionsinformation aus einem Code abgeleitet wird, der aus einer Folge von in Messrichtung hintereinander angeordneten Codeelementen gleicher Breite und mit einer ersten und einer zweiten Eigenschaft besteht. Die Codeelemente sind jeweils aperiodisch angeordnet. Die inkrementale Positionsinformation wird durch eine Fourier Analyse ermittelt.

Nachteilig dabei ist, dass die Fourier-Analyse wiederum eine periodische Anordnung der Codeelemente bedingt. Darüber hinaus ist eine relativ hohe Rechenleistung erforderlich und eine Echtzeitverarbeitung schwierig realisierbar.

Eine vergleichbare Positionsmesseinrichtung ist in der WO 00/06973 A1 beschrieben.

Der Erfindung liegt die Aufgabe zugrunde, eine Positionsmesseinrichtung zu schaffen, mit der auf einfache Weise eine inkrementale Positionsinformation aus dem seriellen Code abgeleitet werden kann.

Diese Aufgabe wird durch die Merkmale des Anspruches 1 gelöst.

Der Erfindung liegt weiterhin die Aufgabe zugrunde, ein Verfahren zur Positionsmessung anzugeben, mit dem eine einfache und sichere Erzeugung einer absoluten sowie inkrementalen Positionsinformation aus einem seriellen Code ermöglicht wird.

Diese Aufgabe wird mit den Merkmalen des Anspruches 7 gelöst.

Vorteilhafte Ausgestaltungen der Erfindung sind in den abhängigen Ansprüchen angegeben.

Die Erfindung wird anhand der Zeichnungen näher erläutert, dabei zeigen:

Figur 1      eine erste Positionsmesseinrichtung in schematischer Darstellung;

Figur 2a      den Code aus Figur 1;

Figur 2b      ein Abtastsignal, das bei der Abtastung des Codes gemäß Figur 2a erzeugt wird;

Figur 2c      den ortsabhängigen Verlauf eines von der Wandlereinrichtung aus dem Abtastsignal gemäß Figur 2b generierten Teilsignals;

Figur 3    eine zweite Positionsmesseinrichtung zur Erzeugung von drei gegeneinander phasenverschobenen Inkrementalsignalen;

Figur 4    einen Code und diesem Code zugeordnete Detektoren sowie die vier damit erzeugbaren gegeneinander phasenverschobenen Inkrementalsignale;

Figur 5    die Nutzung eines Inkrementalsignals zur Auswertung des Codes, und

Figur 6    eine Schaltungsanordnung zur Erzeugung von vier gegeneinander phasenverschobenen Inkrementalsignalen entsprechend der Breite eines Codeelementes und zur Erzeugung von Inkrementalsignalen entsprechend der zweifachen Breite eines Codeelementes.

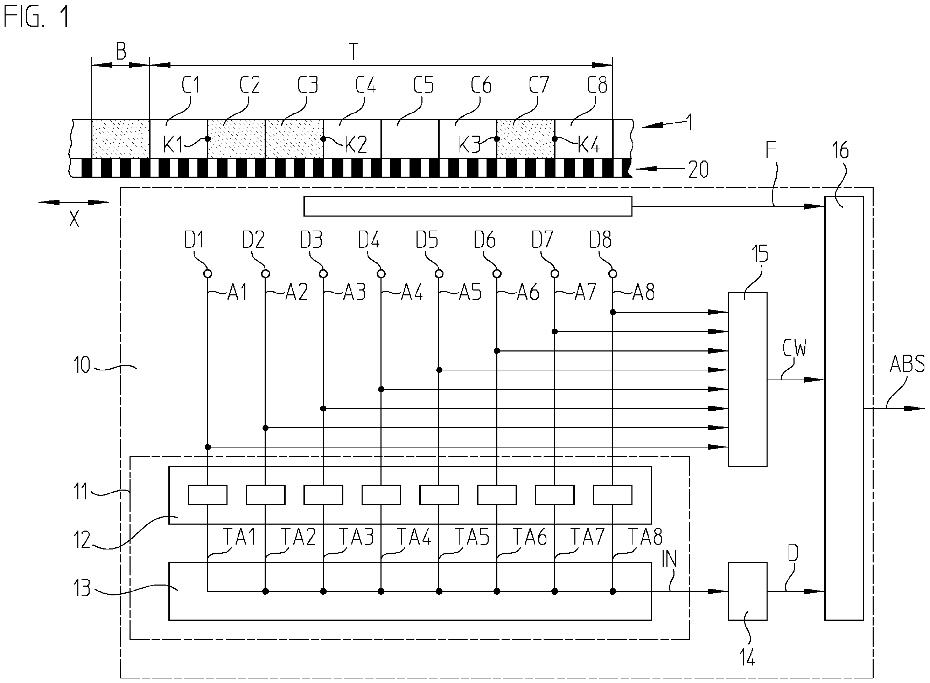

In Figur 1 ist eine erfindungsgemäß ausgestaltete Positionsmesseinrichtung schematisch dargestellt. Anhand dieser Figur 1 wird das Prinzip der Erfindung erläutert, und zwar zum leichteren Verständnis vorerst nur die Erzeugung eines einzigen analogen sinusförmigen periodischen Inkrementalsignals IN aus einem seriellen Code 1. Diese Positionsmesseinrichtung arbeitet nach dem optischen Abtastprinzip, bei dem der Code 1 mittels eines Lichtbündels im Durchlichtverfahren abgetastet wird. Zur Abtastung des Codes 1 dient eine Abtasteinheit 10, die zur Positionsmessung in Messrichtung X relativ zum Code 1 bewegbar angeordnet ist. Der Code 1 besteht aus einer in Messrichtung X hintereinander angeordneten Folge von gleich langen Codeelementen C der Breite B, von denen in Figur 1 die Codeelemente C mit den Indizes 1 bis 8 bezeichnet sind. Es sind Codeelemente C1, C4, C5, C6, C8 mit einer ersten Eigenschaft und Codeelemente C2, C3, C7 mit einer zweiten Eigenschaft vorgesehen, wobei die Codeelemente C1, C4, C5, C6, C8 der ersten Eigenschaft sowie die Codeelemente C2, C3, C7 mit der zweiten Eigenschaft jeweils aperiodisch angeordnet sind. Die in Figur 1 dunkel dargestellten Codeelemente C2, C3, C7 sind opake Bereiche und die anderen Codeelemente C1, C4, C5, C6, C8 sind transparente Bereiche.

Bei jeder Relativstellung des sequentiellen Codes 1 gegenüber der Abtasteinheit 10 wird ein Abschnitt T des Codes 1 mit M Codeelementen C1 bis C8 gleichzeitig abgetastet, wobei M = natürliche Zahl größer gleich 3, im Beispiel ist M=8. Das Lichtbündel wird von dem Code 1 positionsabhängig moduliert, so dass hinter dem Code 1 eine positionsabhängige Lichtverteilung entsteht, die von Detektoren D1 bis D8 erfasst wird. Die Abtastsignale A1 bis A8 der Detektoren D1 bis D8 werden einerseits einer Auswerteeinheit 15 zugeführt, welche in bekannter Weise daraus ein die Absolutposition definierendes Codewort CW bildet. Dabei wird aus jedem der Codeelemente C1 bis C8 ein Bit abgeleitet. Zur Bildung dieses Codewortes CW wird beispielhaft auf die DE 4123722 A1 verwiesen.

Andererseits werden die Abtastsignale A1 bis A8 einer Anordnung 11 zur Bildung eines Inkrementalsignals IN zugeführt. Diese Anordnung 11 weist eine Wandlereinrichtung 12 auf, um aus den mittels der Detektoren D1 bis D8 an den Übergängen K1, K2, K3, K4 gewonnenen, in Abhängigkeit von der Art des Übergangs, unterschiedlich verlaufenden Abtastsignalen A1, A3, A6, A7 jeweils gleichverlaufende Teilsignale TA1, TA3, TA6 und TA7 an jedem der Übergänge K1 bis K4 unabhängig von der Art des Übergangs zu bilden. Weiterhin weist die Anordnung 11 eine Sammeleinrichtung 13 auf, welche diese Teilsignale TA1, TA3, TA6 und TA7 zusammenfasst, um daraus das Inkrementalsignal IN als analoges periodisches Signal mit der Periodenlänge gleich der Breite B eines Codeelementes C1 bis C8 zu bilden. Bei der Erfindung wird im Unterschied zum Stand der Technik nicht die periodische Anordnung von Codeelementen C1 bis C8 zur Bildung des Inkrementalsignals IN gefordert, sondern es wird ausgenutzt, dass die Übergänge K1, K2, K3 und K4 von einem Codeelement einer Eigenschaft zu einem Codeelement der anderen Eigenschaft, im Beispiel von C1 nach C2, von C3 nach C4, von C6 nach C7 und von C7 nach C8, - also die Kanten - an Positionen auftreten, die durch ein Raster der Breite B vorgegeben sind.

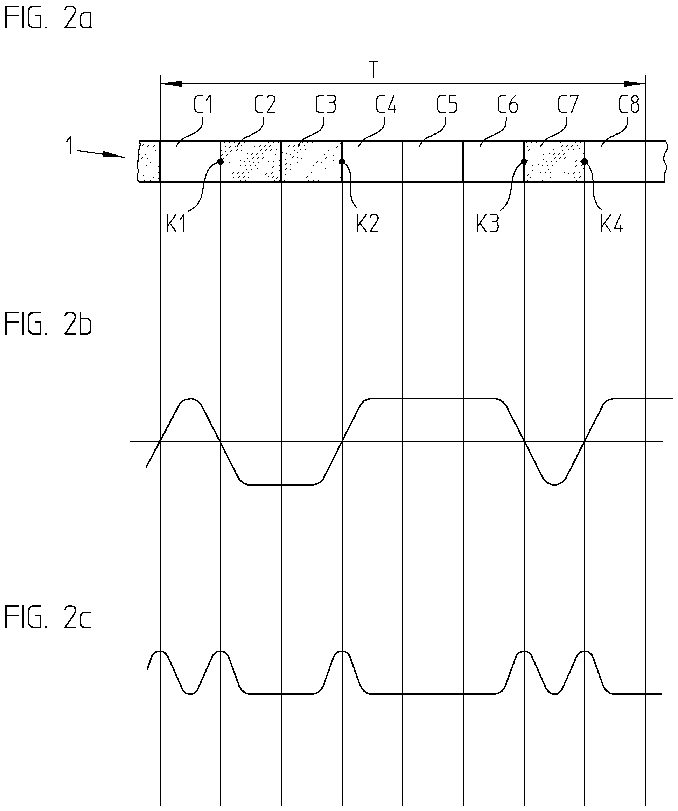

Betrachtet man die von den Detektoren D1 bis D8 an den Übergängen K1 bis K4 des Codes 1 (Figur 2a) erfassten Abtastsignale A1 bis A8, von denen in Figur 2b nur eines dargestellt ist, so ist erkennbar, dass sie in Abhängigkeit des Wechsels an den Übergängen K1 bis K4 unterschiedlich verlaufen. An den Übergängen K1 und K3 wechseln die Abtastsignale A1 bis A8 von einem hohen Pegel zu einem niedrigen Pegel und an den Übergängen K2 und K4 wechseln die Abtastsignale A1 bis A8 von einem niedrigen Pegel zu einem hohen Pegel. Um nun alle Übergänge K1 bis K4 innerhalb des Abschnitts T zur Bildung des Inkrementalsignals IN heranziehen zu können, und zwar unabhängig von der Art des Übergangs, ist die Wandlereinrichtung 12 vorgesehen.

Die Wandlereinrichtung 12 hat die Funktion, die in der Mitte der Codeelemente C2, C3, C7 generierten besonders kleinen Abtastsignale und die in der Mitte der Codeelemente C1, C4, C5, C6, C8 generierten besonders großen Abtastsignale in etwa gleiche Ausgangssignale zu verwandeln. Der Verlauf dieser Ausgangssignale muss sich dabei von dem Verlauf unterscheiden, der an den Übergängen K1 bis K4 entsteht. Vorteilhaft ist es, wenn an den Übergängen K1 bis K4 unabhängig von der Art des Übergangs hell -> dunkel oder dunkel -> hell besonders hohe und an den Mitten der Codeelemente C1 bis C8 besonders niedrige Signale generiert werden. Die Übertragungscharakteristik der Wandlereinrichtung 12 ist dahingehend optimiert, sie weist hierzu eine nichtlineare Übertragungscharakteristik, insbesondere eine quadratische Übertragungscharakteristik auf, die betragsmäßig gleiche, aber vom Vorzeichen unterschiedliche

3

Eingangssignale in ein gleiches Ausgangssignal umwandelt. Zur Realisierung eignen sich nichtlineare Bauelemente wie Transistoren, FET's oder Dioden. Bei einer Verschiebung des Codes 1 wird das Raster der Übergänge K1 bis K4 über die Detektoren D1 bis D8 bewegt, so dass aus den Übergängen K1 bis K4 eine periodische sinusförmige Signaländerung mit der Periode B entsteht. Eines dieser so erzeugten abschnittsweise periodischen Teilsignale ist in Figur 2c dargestellt.

Mit der Anordnung 11 wird ein relativ einfaches durch Hardware realisierbares Verfahren ermöglicht, das eine mittlere Lage aller erfassten Übergänge K1 bis K4 des Codes 1 parallel und somit schnell ermittelt.

Das analoge sinusförmige periodische Inkrementalsignal IN kann mittels eines Interpolators 14 unterteilt und digitalisiert werden, und diese Positionsinformation D dient dazu, die niedrig auflösende absolute Positionsinformation CW an die Signalperiode einer Inkrementalspur 20 anzuschließen. Hierzu ist die Positionsinformation D innerhalb der Breite B eindeutig absolut und besitzt eine Auflösung, die geringer ist als die Auflösung der aus der Inkrementalspur 20 gewonnen Position. Dieser Codeanschluss erfolgt in einer Codeanschlusseinrichtung 16, wobei die Positionsinformation D einerseits an das Codewort CW und andererseits an einen durch Abtastung der Inkrementalspur 20 gewonnenen Feinwert F angeschlossen wird. Am Ausgang der Abtasteinheit 10 steht dann eine resultierende Absolutposition ABS mit der Auflösung der Inkrementalspur 20 zur Verfügung, die in bekannter Weise vorzugsweise über eine serielle Schnittstelle ausgebbar ist.

Die Teilungsperiode der Teilung der Inkrementalspur 20 ist typisch 20 $\mu$m und die Breite B der Codeelemente C1 bis C8 ist typisch größer 80 $\mu$m, beispielsweise 200 $\mu$m.

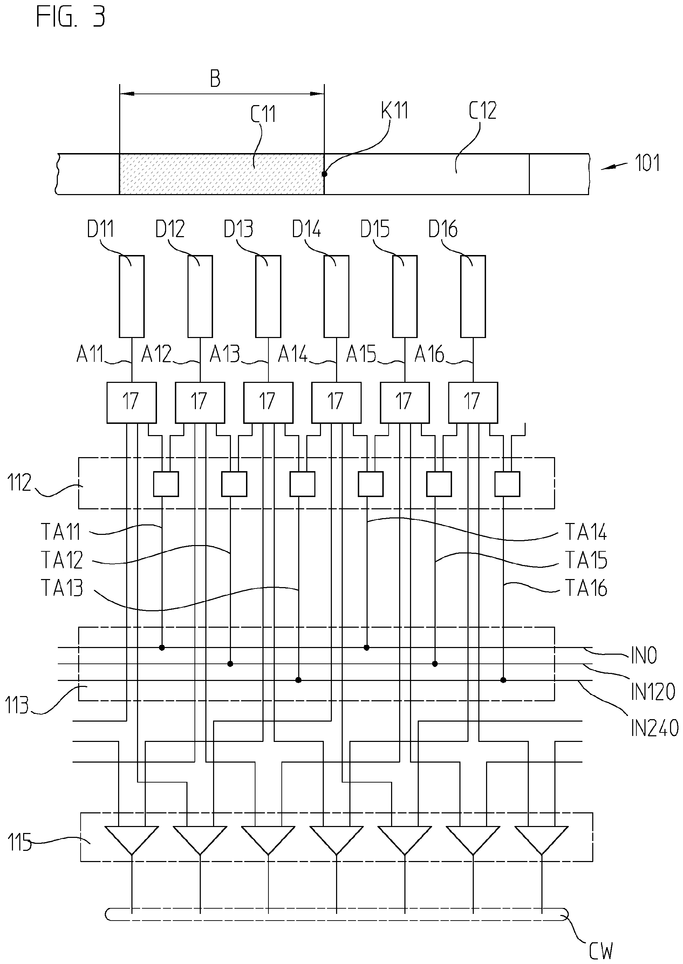

Wie bereits einleitend angegeben, ist oben die Bildung nur eines einzigen periodischen Inkrementalsignals IN erläutert. In der Praxis ist es vorteilhaft, wenn in gleicher Weise mehrere um 90° oder um 180° gegeneinander phasenverschobene Inkrementalsignale gebildet werden, die dann in bekannter Weise verarbeitet werden können. Zur Erzeugung eines zum Inkrementalsignal IN phasenverschobenen Signals ist ein zweiter Satz von Detektoren erforderlich, der zu dem ersten Satz um einen Bruchteil der Breite B eines Codeelementes versetzt ist. Um ein um 120° phasenverschobenes Signal zu erzeugen ist der Versatz B/3, um ein um 90° phasenverschobenes Signal zu erzeugen, ist der Versatz B/4. Allgemein ausgedrückt, sind zur Erzeugung von N gegeneinander phasenverschobenen Inkrementalsignalen N Sätze von Detektoren erforderlich, wobei jedem Codeelement dann N Detektoren zugeordnet sind und innerhalb des Abschnitts T dann (NxM) Detektoren vorzusehen sind, wobei N = natürliche Zahl größer gleich 1. Für jeden Satz von Detektoren ist eine Sammeleinrichtung vorgesehen, so dass jeder N-te Detektor der N-ten Sammeleinrichtungen zugeführt wird. Dabei liefert jede der Sammeleinrichtungen eines der gegeneinander phasenverschobenen Inkrementalsignale mit einer gegenseitigen Phasenverschiebung von $2\pi/N$. An einem zweiten in Figur 3 dargestellten Beispiel wird eine weitere besonders vorteilhafte Ausgestaltung der Erfindung erläutert. Als Code 101 wird ein sogenannter Manchester-Code verwendet, der sicherstellt, dass innerhalb des abgetasteten Abschnitts ausreichend Übergänge K11 im Raster B auftreten, um ein periodisches Inkrementalsignal INO, IN120, IN240 mit der Periodenlänge B zu bilden. Der Code 101 besteht wieder aus einer in Messrichtung X hintereinander angeordneten Folge von gleich langen Codeelementen C11 und C12, von denen in Figur 3 nur zwei dargestellt sind. Das Codeelement C11 ist zum Codeelement C12 komplementär ausgebildet. Komplementär bedeutet dabei, dass sie inverse Eigenschaften besitzen, also beim optischen Abtastprinzip transparent und nicht transparent bzw. reflektierend bzw. nicht reflektierend sind. Die Abfolge der komplementären Codeelemente C11 und C12 bestimmt, ob dem Feld der Breite (2xB) das Bit 0 oder 1 zugeordnet wird. Die Codewertbildung ist in der EP 1468254 B1 im Detail erläutert.

Zur Erzeugung von drei um jeweils 120° gegeneinander phasenverschobenen Inkrementalsignalen INO, IN120, IN240, sind drei Sätze von Detektoren D11 bis D16 vorgesehen. Die Detektoren eines Satzes sind jeweils im Raster B zueinander angeordnet und die Detektoren der Sätze sind jeweils um B/3 gegeneinander versetzt angeordnet. Die Detektoren D11 und D14 bilden den ersten Satz zur Erzeugung des ersten Inkrementalsignals INO, die Detektoren D12 und D15 bilden den zweiten Satz zur Erzeugung des zweiten Inkrementalsignals IN120 und die Detektoren D13 und D16 bilden den dritten Satz zur Erzeugung des dritten Inkrementalsignals IN240.

Die Wandlereinrichtung 112 ist dazu ausgebildet, jedes der Abtastsignale A11 bis A16 mit einem vom benachbarten Detektor D11 bis D16 erzeugten Abtastsignal A11 bis A16 zu vergleichen und die damit gebildete Differenz gleichzurichten, um die erforderlichen Teilsignale TA11 bis TA16 zu erhalten. Ein besonders hohes Teilsignal TA11 bis TA16 wird erzeugt, wenn sich die Abtastsignale A11 bis A16 der benachbart angeordneten Detektoren D11 bis D16 stark unterscheiden, unabhängig vom Vorzeichen der Differenz. Hohe Teilsignale TA11 bis TA16 sind daher den Übergängen K11 zugeordnet. Durch diese Maßnahme werden die Übergänge K11 besonders gewichtet. Die so erzeugten Teilsignale TA11, TA14 sowie TA12, TA15 und TA13, TA16 eines Satzes von Detektoren D11, D14 und D12, D15 und D13, D16 werden jeweils in der Sammeleinrichtung 113 zu einem der Inkrementalsignale INO, IN120, IN240 aufsummiert.

Die Erzeugung des Codewortes CW erfolgt in der Auswerteeinheit 115 gemäß der EP 1468254 B1, auf die hier Bezug genommen wird.

Bei den Abtastsignalen kann es sich um Spannungen oder um Ströme handeln. Werden Ströme verwendet, sind zur Vervielfältigung eines Stromes geeignete Bausteine 17 zu verwenden, wie in Figur 3 schematisch dargestellt.

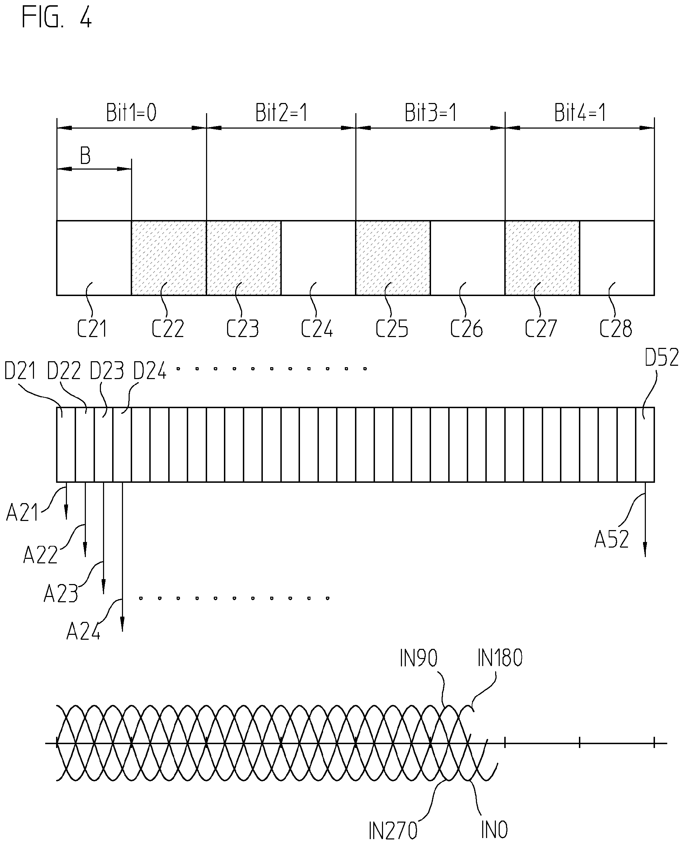

In Figur 4 ist eine Anordnung von Codeelementen C21 bis C28 mit einer Anordnung von N=4 Sätzen Detektoren D21 bis D52 zur Erzeugung von vier um 90° gegeneinander phasenverschobenen Inkrementalsignalen INO, IN90, IN180 und IN270 dargestellt. Die Codeanordnung ist ein Manchester-Code, bei dem die Bitinformation in bekannter Weise durch die Abfolge zweier Codeelemente C21, C22 sowie C23, C24 sowie C25, C26 und C27, C28 definiert ist. Innerhalb eines jeden Codeelementes C21 bis C28 sind vier Detektoren D21 bis D52 angeordnet. Durch Erfassung aller Hell-Dunkel-Übergänge haben die Inkrementalsignale INO, IN90, IN180 und IN270 eine Periodenlänge von B. Die Inkrementalsignale INO, IN90, IN180 und IN270 werden wieder durch Differenzbildung benachbarter Detektoren D21 bis D52, anschließender Gleichrichtung und anschließender Summenbildung der somit gebildeten Teilsignale generiert:

$$IN0 = |A22 - A23| + |A26 - A27| + |A30 - A31| + |A34 - A35| + ......$$

$$IN90 = |A23 - A24| + |A27 - A28| + |A31 - A32| + |A35 - A36| + ......$$

$$IN180 = |A24 - A25| + |A28 - A29| + |A32 - A33| + |A36 - A37| + ......$$

$$IN270 = |A25 - A26| + |A29 - A30| + |A33 - A34| + |A37 - A38| + ....$$

Alternativ können die Inkrementalsignale auch durch folgende Beziehungen gebildet werden:

$$IN0 = |(A21 + A22) - (A23 + A24)| + |(A25 + A26) - (A27 + A28)| + |(A29 + A30) - (A31 + A32)| + |(A33 + A34) - (A35 + A36)| + ......$$

$$IN90 = |(A22 + A23) - (A24 + A25)| + |(A26 + A27) - (A28 + A29)| + |(A30 + A31) - (A32 + A33)| + |(A34 + A35) - (A36 + A37)| + .....$$

Zusammenfassend betrifft die Erfindung also eine Positionsmesseinrichtung mit einem Code 1, 101, bestehend aus einer Folge von in Messrichtung X angeordneten Codeelementen C1 bis C28 gleicher Breite B und mit einer ersten und einer zweiten Eigenschaft, wobei die Codeelemente C1, C4, C5, C6, C8, C12, C21, C24, C26, C28 mit der ersten Eigenschaft sowie die Codeelemente C2, C3, C7, C11, C22, C23, C25, C27 mit der zweiten Eigenschaft jeweils aperiodisch angeordnet sind. Abhängig von der Eigenschaft des Codeelementes C1 bis C28 wird ein Abtastsignal A1 bis A52 mit einem hohen Signalpegel oder einem niederen Signalpegel generiert. Die Positionsmesseinrichtung weist eine Abtasteinheit 10 mit mehreren Detektoren D1 bis D52 zur Abtastung jeweils eines Abschnitts T des Codes 1, 101 zumindest an Abtastpositionen in einem Abstandsraster B, und zur Bildung eines die Absolutposition definierenden Codewortes CW aus den unterschiedlichen Signalpegeln sowie zumindest eines Inkrementalsignals IN, INO, IN90, IN180, IN270, IN120, IN240 aus mittels der Detektoren D1 bis D52 gewonnenen Abtastsignalen A1 bis A52 auf. Die Anordnung von Detektoren D1 bis D52 im Abstandsraster B bedeutet, dass nicht zwingend an jeder im Abstandsraster B vorgegebenen Position ein Detektor D1 bis D52 vorhanden sein muss. Die Positionsmesseinrichtung beinhaltet eine Anordnung 11 zur Bildung des Inkrementalsignals IN, INO, IN90, IN180, IN270, IN120, IN240, aufweisend eine Wandlereinrichtung 12, 112 und eine der Wandlereinrichtung 12, 112 nachgeordnete Sammeleinrichtung 13, 113, wobei die Wandlereinrichtung 12, 112 die Abtastsignale A1 bis A52 derart in Teilsignale TA1 bis TA16 wandelt, dass die von den Abtastpositionen im Abstandsraster B abgeleiteten Teilsignale TA1 bis TA16 von der Sammeleinrichtung 13, 113 zusammengefasst das zumindest eine Inkrementalsignal IN, INO, IN90, IN180, IN270, IN120, IN240 als periodisches Signal mit der Periode entsprechend der Breite B bildet. Dabei hat die Wandlereinrichtung 12, 112 die Funktion, die an Übergängen K1 bis K12 von einem der Codeelemente C1, C4, C5, C6, C8, C12, C21, C24, C26, C28 einer Eigenschaft zu einem der Codeelemente C2, C3, C7, C11, C22, C23, C25, C27 der anderen Eigenschaft abgeleiteten Abtastsignale A1 bis A52 jeweils in Teilsignale TA1 bis TA16 mit einem periodischen Signalverlauf der Periode B zu wandeln, wobei dieser periodische Signalverlauf unabhängig davon ist, ob der Übergang von der ersten Eigenschaft zur zweiten Eigenschaft oder von der zweiten Eigenschaft zur ersten Eigenschaft ist. Die von den übrigen Bereichen der Codeelemente C1, C4, C5, C6, C8, C12, C21, C24, C26, C28 mit der ersten Eigenschaft und der Codeelemente C2, C3, C7, C11, C22, C23, C25, C27 mit der zweiten Eigenschaft abgeleiteten Abtastsignale A1 bis A52 werden jeweils in gleichverlaufende Teilsignale TA1 bis TA16 gewandelt. Der periodische Signalverlauf ist von jedem der Übergänge K1 bis K12 aus gesehen in einem Bereich +B/2 und -B/2 vorhanden. Gleichverlaufende Teilsignale TA1 bis TA16 bedeutet, dass der Signalverlauf der Abtastsignale A1 bis A52 außerhalb dieser Übergangsbereiche K1 bis K12 einen konstanten Pegel aufweist, und zwar unabhängig von der Eigenschaft des Codeelementes C1 bis C28.

In vorteilhafter Weise ist die Wandlereinrichtung 112 dazu ausgebildet, die Abtastsignale A11 bis A52 jeweils mit einem Referenzsignal zu vergleichen und die durch den Vergleich gebildete Differenz gleichzurichten. Das Referenzsignal kann dabei ein vorgegebenes konstantes Signal sein, oder ein Abtastsignal A11 bis A52, das von einer in Messrichtung X beabstandeten Abtastposition, also einem benachbarten Detektor D11 bis D52 stammt.

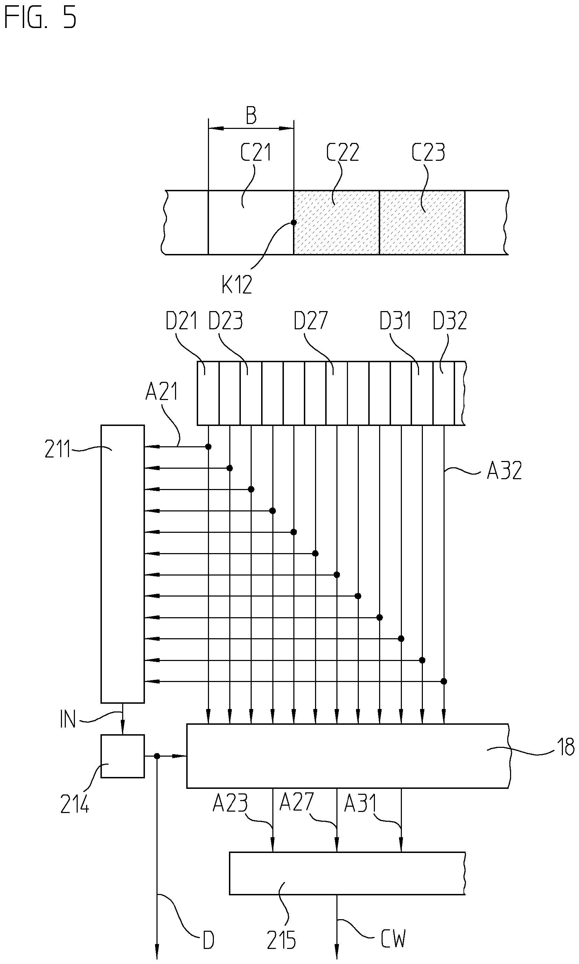

Anhand der Figur 5 wird erläutert, wie die gemäß Figur 4 aus den Codeelementen C21 bis C28 generierten Inkrementalsignale INO, IN90, IN180 und IN270 auch zur korrekten Bildung des Codewortes CW genutzt werden können. Die Funktionsweise wird anhand eines Ausschnitts mit drei Codeelementen C21, C22 und C23 erläutert, zu deren Abtastung in der dargestellten Momentanstellung die Detektoren D21 bis D32 dienen. Die Abtastsignale A21 bis A32 der Detektoren D21 bis D32 werden der Anordnung 211 zur Bildung der vier um 90° gegeneinander phasenverschobenen Inkrementalsignale IN0, IN90, IN180 und IN270 zugeführt, die in der Figur nur mit IN bezeichnet sind. Der Interpolator 214 bildet aus diesen Inkrementalsignalen IN0, IN90, IN180 und IN270 eine absolute Positionsinformation D, welche die Länge B jeweils eindeutig absolut unterteilt.

In der DE 4123722 A1 ist erläutert, dass zur sicheren Bildung eines Codewortes die Abtastsignale ausgewählt werden, die einen eindeutigen Bereich eines Codeelementes abtasten. In der EP 1329696 A1 ist die sichere Bildung eines Codewortes anhand einer Manchester-Codierung erläutert. In beiden Fällen erfolgt die Auswahl der korrekten Abtastsignale aus der Positionsinformation einer neben dem Code angeordneten Inkrementalspur. In vorteilhafter Weise wird nun die gemäß der Erfindung generierte Positionsinformation D zur korrekten Auswahl der Abtastsignale A23, A27, A31 zur Bildung des Codewortes CW verwendet. Hierzu sind die Abtastsignale A21 bis A32 einer Auswahleinrichtung 18 zugeführt, die in Abhängigkeit der Positionsinformation D die Abtastsignale A23, A27, A31 auswählt, die zur sicheren Bildung des Codewortes CW geeignet sind. Geeignet sind die Abtastsignale A23, A27, A31, welche die Mittenbereiche der Codeelemente C21, C22 und C23 abtasten, so dass zur Bildung des Codewortes CW die von den unsicheren Übergängen abgeleiteten Abtastsignale A21, A25 und A29 nicht verwendet werden.

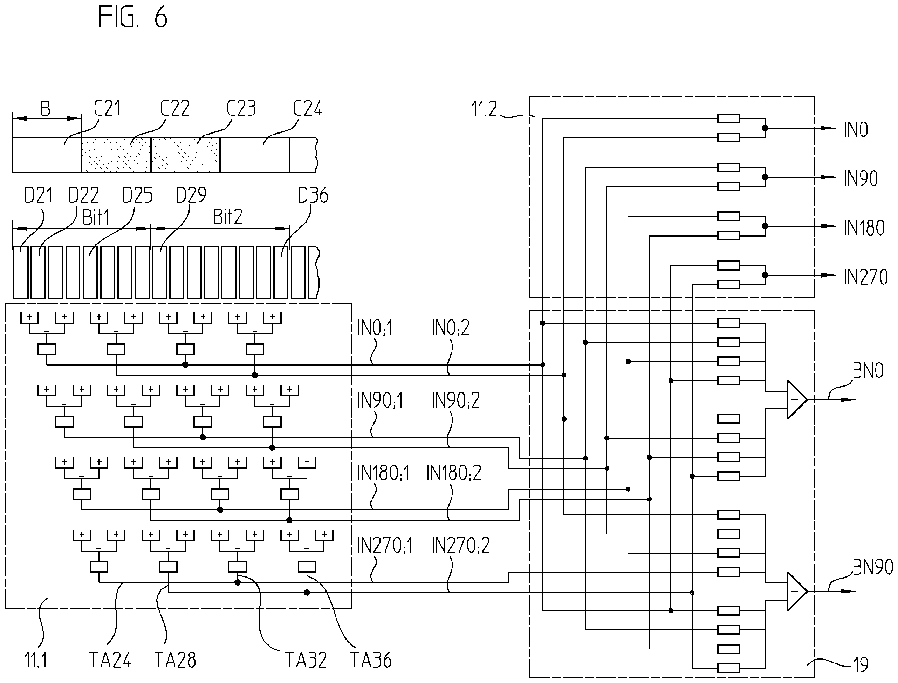

Anhand der Figur 6 wird nun erläutert, wie mit der Erfindung auch Inkrementalsignale BN0, BN90 mit einer Periode der Breite 2xB erzeugt werden können. Besonders vorteilhaft kann es nämlich sein, aus einem Manchester-Code Inkrementalsignale BN0, BN90 abzuleiten, die eine Periode der Länge 2xB aufweisen, also innerhalb eines Bits eine eindeutige Positionsinformation liefern. Bei der Verwendung eines Manchester-Codes wird jeweils ein Bit des Codewortes CW aus dem Vergleich, insbesondere Differenzbildung, von Abtastsignalen zweier aufeinanderfolgender Codeelemente gebildet. Aus dem zumindest einen periodischen Inkrementalsignal BN0, BN90 mit der Periode 2 x B werden nun die zum Vergleich geeigneten Abtastsignale bestimmt. Das heißt, dass die aus den Inkrementalsignalen BN0, BN90 gewonnene Positionsinformation dazu genutzt wird, um die korrekte Differenzbildung zur Erzeugung eines Bits aus den zwei komplementären Codeelementen des Bits festzulegen. Die Erkenntnis der Erzeugung eines Bits durch Differenzbildung kann hier vorausgesetzt werden, beispielhaft wird aber auf die EP 1468254 B1 verwiesen, weshalb sich weitere Erläuterungen dazu erübrigen.

Im Detail erläutert wird die Erzeugung zweier um 90° gegeneinander phasenverschobener Inkrementalsignale BN0 und BN90 der Periode 2xB. Figur 6 zeigt einen Ausschnitt eines Manchester-Codes, der wiederum aus mehreren hintereinander angeordneten Codeelementen C21 bis C24 besteht. Zur Abtastung dienen mehrere Detektoren, von denen die Detektoren D21 bis D36 dargestellt sind. Die Detektoren D21 bis D36 bilden vier Sätze von Detektoren zur Erzeugung von vier um 90° gegeneinander phasenverschobenen Inkrementalsignalen IN0, IN90, IN180, IN270, wie bereits vorstehend erläutert. Die Abtastsignale benachbarter Detektoren werden miteinander verglichen und das Vergleichsergebnis gleichgerichtet. Die gleichgerichteten Signale sind die Teilsignale, von denen aus Gründen der Übersichtlichkeit in der Figur 6 nur die Teilsignale TA24, TA28, TA32 und TA36 bezeichnet sind. Die jeweils an Abtastpositionen im Raster B abgeleiteten Teilsignale werden zusammengefasst, also aufsummiert. Gemäß Figur 6 werden somit die Abtastsignale jeweils zweier Detektoren D21, D22 zu einem Abtastsignal addiert, was durch das Pluszeichen "+" dargestellt ist, und mit der Summe der benachbarten Abtastsignale D23, D24 verglichen, was durch das Differenzzeichen "-" dargestellt ist. Die Differenz (A21 +A22)-(A23+A24) wird gleichgerichtet. In der Anordnung 11.1 werden nun folgende Summen gleichgerichteter Teilsignale gebildet:

$$IN0;1 = | (A21 + A22) - (A23 + A24) | + | (A29 + A30) - (A31 + A32) | + | (A33 + A34) - (A35 + A36)| + ......$$

$$IN0;2 = | (A25 + A26) - (A27 + A28)| + | (A33 + A34) - (A35 + A36)| + ....$$

$$IN90;1 = |(A22 + A23) - (A24 + A25)| + |(A30 + A31) - (A32 + A33)| + ....$$

$$IN90;2 = |(A26 + A27) - (A28 + A29)| + |(A34 + A35) - (A36 + A37)| + ....$$

$$IN180;1 = |(A23 + A24) - (A25 + A26)| + |(A31 + A32) - (A33 + A34)| + |(A35 + A36) - (A37 + A38)| + ......$$

$$IN180;2 = |(A27 + A28) - (A29 + A30)| + |(A35 + A36) - (A37 + A38)| + ....$$

$$IN270;1 = |(A24 + A25) - (A26 + A27)| + |(A32 + A33) - (A34 + A35)| + ....$$

$$IN270;2 = |(A28 + A29) - (A30 + A31)| + |(A36 + A37) - (A38 + A39)| + ....$$

In der Anordnung 11.2 werden diese Summen von Teilsignalen weiter addiert zu den periodischen analogen um 90° gegeneinander phasenverschobenen Inkrementalsignalen mit der Periode B:

$$IN0 = IN0;1 + IN0;2$$

$$IN90 = IN90;1 + IN90;2$$

$$IN180 = IN180;1 + IN180;2$$

$$IN270 = IN270;1 + IN270;2$$

Die Sinusform dieser Inkrementalsignale IN0, IN90, IN180 und IN270 ist durch die Mittelung über viele Codeelemente und Kanten sehr gut, so dass durch sie eine sehr genaue Bestimmung einer Absolutposition innerhalb der Breite B durch bekannte Interpolationsverfahren ermöglicht wird.

Zur Erzeugung der Inkrementalsignale BN0 und BN90 mit der Periode 2xB werden diese Signale verknüpft:

$$BN0 = (IN0;1 + IN90;1 + I180;1 + I270;1) - (IN0;2 + IN90;2 + IN180;2 + IN270;2)$$

$$BN90 = (IN0;2 + IN90;2 + I180;2 + I270;2) - (IN0;1 + IN90;1 + IN180;2 + IN270;2)$$

Die Form dieser Inkrementalsignale BN0 und BN90 ist dazu geeignet, um damit eine eindeutige Unterscheidung zwischen dem rechten und linken Bereich B innerhalb 2xB der Manchester-Codierung 101 zu ermöglichen.

Beim optischen Abtastprinzip können alle Elemente der Abtasteinheit 10 platzsparend in einem OPTO-ASIC ausgebildet sein. Die Erfindung ist aber nicht auf das optische Abtastprinzip beschränkt. So können beispielsweise auch magnetische, induktive oder kapazitive Positionsmesseinrichtungen erfindungsgemäß ausgestaltet werden. Die Art der Detektoren und die Ausführung der ersten und zweiten Eigenschaften der Codeelemente muss dann entsprechend dem Abtastprinzip gewählt werden, ansonsten ist aber die obige Beschreibung direkt übertragbar.

Die absolute Positionsmesseinrichtung kann zur Messung von linearen oder rotatorischen Bewegungen eingesetzt werden, wobei der Code 1, 101 an einem der beweglichen Objekte und die Abtasteinheit 10 am anderen der zu messenden Objekte angebracht ist. Der Code 1, 101 kann dabei direkt an dem zu messenden Objekt angebracht sein oder auf einem Maßstab, der dann wiederum mit dem zu messenden Objekt gekoppelt ist.

Die zu messenden Objekte können dabei der Tisch und der Schlitten einer Werkzeugmaschine, einer Koordinatenmessmaschine oder der Rotor und der Stator eines Elektromotors sein.

**Patentansprüche**

1. Positionsmesseinrichtung mit

   - einem Code (1, 101), bestehend aus einer Folge von in Messrichtung X angeordneten Codeelementen (C1 bis C28) gleicher Breite B und mit einer ersten und einer zweiten Eigenschaft, wobei die Codeelemente (C1, C4, C5, C6 C8, C12, C21, C24, C26, C28) mit der ersten Eigenschaft sowie die Codeelemente (C2, C3, C7, C11, C22, C23, C25, C27) mit der zweiten Eigenschaft jeweils aperiodisch angeordnet sind;
   - einer Abtasteinheit (10) mit mehreren Detektoren (D1 bis D52) zur Abtastung des Codes (1, 101) und Gewinnung von Abtastsignalen (A1 bis A52), aus denen ein die Absolutposition definierendes Codewort (CW) gebildet wird, und
   - einer Anordnung (11, 11.1, 11.2, 211) zur Bildung zumindest eines Inkrementalsignals (IN, IN0, IN90, IN180, IN270, IN120, IN240, BN0, BN90) aus den Abtastsignalen (A1 bis A52),

   **dadurch gekennzeichnet, dass**

   - die Anordnung (11, 211) zur Bildung des Inkrementalsignals (IN, IN0, IN90, IN180, IN270, IN120, IN240, BN0, BN90) eine Wandlereinrichtung (12, 112) und eine der Wandlereinrichtung (12, 112) nachgeordnete Sammeleinrichtung (13, 113) aufweist, wobei

   die Wandlereinrichtung (12, 112) dazu ausgebildet ist, die an Abtastpositionen im Abstandsraster B abgeleiteten Abtastsignale (A1 bis A52) jeweils mit einem Abtastsignal (A1 bis A52) eines weiteren in Messrichtung X beabstandeten Detektors (D1 bis D52) zu vergleichen und die durch den Vergleich gebildete Differenz durch Betragsbildung gleichzurichten und damit jeweils abschnittsweise periodische Teilsignale (TA1 bis TA36) bildet, die der Sammeleinrichtung (13, 113) zugeführt sind und von der Sammeleinrichtung (13, 113) aufsummiert werden.

2. Positionsmesseinrichtung nach Anspruch 1, **dadurch gekennzeichnet, dass** zur Erzeugung von N gegeneinander phasenverschobenen Inkrementalsignalen (IN0, IN90, IN180, IN270, IN120, IN240) N Sätze von Detektoren (D11 bis D52) vorgesehen sind, mit N = natürliche Zahl größer gleich 1, wobei N Detektoren (D11 bis D52) im jeweiligen Abstand von B/N innerhalb der Breite B angeordnet sind, und für jeden Satz von Detektoren (D11 bis D52) eine Sammeleinrichtung (113) zur Bildung eines der gegeneinander phasenverschobenen Inkrementalsignale (IN0, IN90, IN180, IN270, IN120, IN240) vorgesehen ist.

3. Positionsmesseinrichtung nach einem der vorhergehenden Ansprüche, **dadurch gekennzeichnet, dass** die Codeelemente (C1 bis C28) optisch abtastbar ausgestaltet sind, indem die Codeelemente (C1, C4, C5, C6, C8, C12, C21, C24, C26, C28) mit der ersten Eigenschaft transparent und die Codeelemente (C2, C3, C7, C11, C22, C23, C25, C27) der zweiten Eigenschaft nichttransparent oder die Codeelemente mit der ersten Eigenschaft reflektierend und die Codeelemente der zweiten Eigenschaft nichtreflektierend sind.

4. Positionsmesseinrichtung nach einem der vorhergehenden Ansprüche, **dadurch gekennzeichnet, dass** jedem Codeelement (C21 bis C23) mehrere Detektoren (D21 bis D32) zugeordnet sind, und dass die Abtastsignale (A21 bis A32) dieser mehreren Codeelemente (C21 bis C23) einer Auswahleinrichtung (18) zugeführt sind, die in Abhängigkeit einer aus dem Inkrementalsignal (IN) abgeleiteten Positionsinformation (D) Abtastsignale (A23, A27, A31) auswählt, die zur Bildung des Codewortes (CW) geeignet sind.

5. Positionsmesseinrichtung nach einem der vorhergehenden Ansprüche, **dadurch gekennzeichnet, dass** der Code (101) ein Manchester-Code ist.

6. Positionsmesseinrichtung nach einem der vorhergehenden Ansprüche, **gekennzeichnet durch** eine Schaltung (19), mit der aus den Teilsignalen (TA11 bis TA36) zumindest ein periodisches Inkrementalsignal (BNO, BN90) bildbar ist, das eine Periode 2 x B aufweist.

7. Verfahren zur Positionsmessung mit folgenden Verfahrensschritten:

- Abtasten eines Codes (1, 101), bestehend aus einer Folge von in Messrichtung X angeordneten Codeelementen (C1 bis C28) gleicher Breite B und mit einer ersten und einer zweiten Eigenschaft, wobei die Codeelemente (C1, C4, C5, C6, C8, C12, C21, C24, C26, C28) mit der ersten Eigenschaft sowie die Codeelemente (C2, C3, C7, C11, C22, C23, C25, C27) mit der zweiten Eigenschaft jeweils aperiodisch angeordnet sind;
- Bilden eines die Absolutposition definierenden Codewortes (CW) aus mittels mehrerer Detektoren (D1 bis D52) gewonnenen Abtastsignalen (A1 bis A52);
- Bilden zumindest eines Inkrementalsignals (IN, IN0, IN90, IN180, IN270, IN120, IN240, BN0 BN90) aus den Abtastsignalen (A1 bis A52),

**dadurch gekennzeichnet, dass**

- zur Bildung des zumindest einen Inkrementalsignals (IN, IN0, IN90, IN180, IN270, IN120, IN240, BN0, BN90) die an Abtastpositionen im Abstandsraster B gewonnenen Abtastsignale (A1 bis A52) in abschnittsweise periodische Teilsignale (TA1 bis TA36) gewandelt werden, und dass diese Teilsignale (TA1 bis TA36) aufsummiert werden, wobei

die Teilsignale (TA1 bis TA36) gebildet werden, indem jeweils eines der Abtastsignale (A1 bis A16) mit einem Abtastsignal (A1 bis A16) zumindest eines in Messrichtung X beabstandet angeordneten weiteren Detektors (D1 bis D52) verglichen wird und die durch den Vergleich gebildete Differenz durch Betragsbildung gleichgerichtet wird.

8. Verfahren nach Anspruch 7, **dadurch gekennzeichnet, dass** von jedem Codeelement (C21 bis C23) mehrere Abtastsignale (A21 bis A32) abgeleitet werden, die einer Auswahleinrichtung (18) zugeführt werden, welche in Abhängigkeit einer aus dem Inkrementalsignal (IN) abgeleiteten Positionsinformation (D) Abtastsignale (A23, A27, A31) auswählt, die zur Bildung des Codewortes (CW) geeignet sind.

9. Verfahren nach einem der Ansprüche 7 oder 8, **dadurch gekennzeichnet, dass** aus den Teilsignalen (TA11 bis TA36) zumindest ein periodisches Inkrementalsignal (BNO, BN90) mit einer Periode 2 x B gebildet wird.

10. Verfahren nach einem der Ansprüche 7 bis 9, **dadurch gekennzeichnet, dass** die Abtastsignale (A11 bis A52) aus einem Manchester Code (101) abgeleitet werden, wobei ein Bit des Codewortes (CW) aus dem Vergleich von Abtastsignalen (A11 bis A52) zweier Codeelemente (C1 bis C28) gebildet wird.

11. Verfahren nach Anspruch 9 und 10, **dadurch gekennzeichnet, dass** aus dem zumindest einen periodischen Inkrementalsignal (BNO, BN90) mit der Periode 2 x B die zum Vergleich geeigneten Abtastsignale (A11 bis A52) bestimmt werden.

**Claims**

1. Position measuring device comprising

- a code (1, 101), consisting of a sequence of code elements (C1 to C28) arranged in a measurement direction X and having an identical width B and having a first and a second property, wherein the code elements (C1, C4, C5, C6, C8, C12, C21, C24, C26, C28) having the first property and the code elements (C2, C3, C7, C11, C22, C23, C25, C27) having the second property are arranged aperiodically in each case;
- a scanning unit (10) having a plurality of detectors (D1 to D52) for scanning the code (1, 101) and obtaining scanning signals (A1 to A52), from which a code word (CW) defining the absolute position is formed, and
- an arrangement (11, 11.1, 11.2, 211) for forming at least one incremental signal (IN, IN0, IN90, IN180, IN270, IN120, IN240, BN0, BN90) from the scanning signals (A1 to A52),

**characterized in that**

- the arrangement (11, 211) for forming the incremental signal (IN, IN0, IN90, IN180, IN270, IN120, IN240, BN0, BN90) comprises a converter device (12, 112) and a collecting device (13, 113) disposed downstream of the converter device (12, 112), wherein

the converter device (12, 112) is configured to compare the scanning signals (A1 to A52) derived at scanning positions in the spacing grid B in each case with a scanning signal (A1 to A52) of a further detector (D1 to D52) spaced apart in the measurement direction X and to rectify the difference formed by the comparison by absolute value formation and thus forms in each case piecewise periodic partial signals (TA1 to TA36), which are fed to the collecting device (13, 113) and are summed by the collecting device (13, 113).

2. Position measuring device according to Claim 1, **characterized in that** for generating N incremental signals (IN0, IN90, IN180, IN270, IN120, IN240) that are phase-shifted relative to one another, N sets of detectors (D11 to D52) are provided, where N = natural number greater than or equal to 1, wherein N detectors (D11 to D52) are arranged with the respective spacing of B/N within the width B, and for each set of detectors (D11 to D52) provision is made of a collecting device (113) for forming one of the incremental signals (IN0, IN90, IN180, IN270, IN120, IN240) that are phase-shifted relative to one another.

3. Position measuring device according to either of the preceding claims, **characterized in that** the code elements (C1 to C28) are configured as optically scannable by virtue of the fact that the code elements (C1, C4, C5, C6, C8, C12, C21, C24, C26, C28) having the first property are transparent and the code elements (C2, C3, C7, C11, C22, C23, C25, C27) having the second property are non-transparent or the code elements having the first property are reflective and the code elements having the second property are non-reflective.

4. Position measuring device according to any of the preceding claims, **characterized in that** a plurality of detectors (D21 to D32) are assigned to each code element (C21 to C23), and **in that** the scanning signals (A21 to A32) of said plurality of code elements (C21 to C23) are fed to a selection device (18), which selects, depending on position information (D) derived from the incremental signal (IN), scanning signals (A23, A27, A31) that are suitable for forming the code word (CW).

5. Position measuring device according to any of the preceding claims, **characterized in that** the code (101) is a Manchester code.

6. Position measuring device according to any of the preceding claims, **characterized by** a circuit (19) with which at least one periodic incremental signal (BNO, BN90) having a period $2 \times B$ is formable from the partial signals (TA11 to TA36).

7. Method for position measurement comprising the following method steps:

   - scanning a code (1, 101), consisting of a sequence of code elements (C1 to C28) arranged in a measurement direction X and having an identical width B and having a first and a second property, wherein the code elements (C1, C4, C5, C6, C8, C12, C21, C24, C26, C28) having the first property and the code elements (C2, C3, C7, C11, C22, C23, C25, C27) having the second property are arranged aperiodically in each case;
   - forming a code word (CW) defining the absolute position from scanning signals (A1 to A52) obtained by means of a plurality of detectors (D1 to D52);
   - forming at least one incremental signal (IN, IN0, IN90, IN180, IN270, IN120, IN240, BN0, BN90) from the scanning signals (A1 to A52),

   **characterized in that**

   - for forming the at least one incremental signal (IN, IN0, IN90, IN180, IN270, IN120, IN240, BN0, BN90), the scanning signals (A1 to A52) obtained at scanning positions in the spacing grid B are converted into piecewise periodic partial signals (TA1 to TA36), and **in that** said partial signals (TA1 to TA36) are summed, wherein

   the partial signals (TA1 to TA36) are formed by respectively one of the scanning signals (A1 to A16) being compared with a scanning signal (A1 to A16) of at least one further detector (D1 to D52) arranged in a manner spaced apart in the measurement direction X, and the difference formed by the comparison being rectified by absolute value formation.

8. Method according to Claim 7, **characterized in that** a plurality of scanning signals (A21 to A32) are derived from each code element (C21 to C23) and are fed to a selection device (18), which selects, depending on position information (D) derived from the incremental signal (IN), scanning signals (A23, A27, A31) that are suitable for forming the code word (CW).

9. Method according to either of Claims 7 and 8, **characterized in that** at least one periodic incremental signal (BNO, BN90) having a period 2 × B is formed from the partial signals (TA11 to TA36).

10. Method according to any of Claims 7 to 9, **characterized in that** the scanning signals (A11 to A52) are derived from a Manchester Code (101), wherein a bit of the code word (CW) is formed from the comparison of scanning signals (A11 to A52) of two code elements (C1 to C28).

11. Method according to Claims 9 and 10, **characterized in that** the scanning signals (A11 to A52) suitable for the comparison are determined from the at least one periodic incremental signal (BNO, BN90) having the period 2 × B.

## Revendications

1. Dispositif de mesure de position comportant

   - un code (1, 101) constitué d'une séquence d'éléments de code (C1 à C28) de même largeur B disposés dans la direction de mesure X et présentant des première et seconde propriétés, dans lequel les éléments de code (C1, C4, C5, C6, C8, C12, C21, C24, C26, C28) présentent la première propriété et les éléments de code (C2, C3, C7, C11, C22, C23, C25, C27) présentant chacun la seconde propriété sont disposés de manière apériodique ;
   - une unité de balayage (10) comportant une pluralité de détecteurs (D1 à D52) destinés à balayer le code (1, 101) et à obtenir des signaux de balayage (A1 à A52) à partir desquels est généré un mot de code (CW) définissant la position absolue, et
   - un système (11, 11.1, 11. 2, 211) destiné à générer au moins un signal incrémentiel (IN, IN0, IN90, IN180, IN270, IN120, IN240, BN0, BN90) à partir des signaux de balayage (A1 à A52),

   **caractérisé en ce que**

   - le système (11, 211) destiné à générer le signal incrémental (IN, IN0, IN90, IN180, IN270, IN120, IN240, BN0, BN90) comporte un dispositif transducteur (12, 112) et un dispositif collecteur (13, 113) disposé en aval du dispositif transducteur (12, 112), dans lequel le dispositif de transducteur (12, 112) est conçu pour comparer les signaux de balayage (A1 à A52) respectivement dérivés à des positions de balayage dans la grille d'espacement B à un signal de balayage (A1 à A52) d'un autre détecteur (D1 à D52) espacé dans la direction de mesure X et pour compenser, par calcul de valeur, la différence déterminée par la comparaison et ainsi déterminer des signaux partiels périodiques (TA1 à TA36) qui sont envoyés au dispositif de collecte (13, 113) et qui sont sommés par le dispositif de collecte (13, 113).

2. Dispositif de mesure de position selon la revendication 1, **caractérisé en ce qu'**il est prévu N ensembles de détecteurs (D11 à D52) pour générer N signaux incrémentiels (IN0, IN90, IN180, IN270, IN120, IN240) déphasés les uns par rapport aux autres, où N = nombre naturel supérieur ou égal à 1, dans lequel N détecteurs (D11 à D52) sont disposés à des distances respectives de B/N de la largeur B, et **en ce qu'**il est prévu pour chaque ensemble de détecteurs (D11 à D52) un moyen collecteur (113) pour déterminer l'un des signaux incrémentiels (IN0, IN90, IN180, IN270, IN120, IN240) déphasés les uns par rapport aux autres.

3. Dispositif de mesure de position selon l'une des revendications précédentes, **caractérisé en ce que** les éléments de code (C1 à C28) peuvent être balayés optiquement en faisant en sorte que les éléments de code (C1, C4, C5, C6, C8, C12, C21, C24, C26) présentent la première propriété soient transparents et que les éléments de code (C2, C3, C7, C11, C22, C23, C25, C27) présentent la seconde propriété ne soient pas transparents ou que les éléments de code présentent la première propriété soient réfléchissants et que les éléments de code présentent la seconde propriété ne soient pas réfléchissants.

4. Dispositif de mesure de position selon l'une des revendications précédentes, **caractérisé en ce que** plusieurs détecteurs (D21 à D32) sont associés à chaque élément de code (C21 à C23), et **en ce que** les signaux de balayage (A21 à A32) de ces différents éléments de code (C21 à C23) sont envoyés à un dispositif de sélection (18) qui sélectionne des signaux de balayage (A23, A27, A31) qui conviennent pour déterminer le mot de code (CW) en fonction d'informations de position (D) dérivées du signal incrémentiel (IN).

5. Dispositif de mesure de position selon l'une des revendications précédentes, **caractérisé en ce que** le code (101) est un code Manchester.

6. Dispositif de mesure de position selon l'une des revendications précédentes, **caractérisé par** un circuit (19) avec lequel au moins un signal incrémentiel périodique (BNO, BN90) peut être généré à partir des signaux partiels (TA11 à TA36), lequel signal présente une période de 2 x B.

7. Procédé de mesure de position comprenant les étapes consistant à :

- balayer un code (1, 101) constitué d'une séquence d'éléments de code (C1 à C28) de même largeur B disposés dans la direction de mesure X et ayant des première et seconde propriétés, dans lequel les éléments de code (C1, C4, C5, C6, C8, C12, C21, C24, C26, C28) présentent la première propriété et les éléments de code (C2, C3, C7, C11, C22, C23, C25, C27) présentent chacun la seconde propriété sont disposés de manière apériodique ;
- générer un mot de code (CW) définissant la position absolue à partir de signaux de balayage (A1 à A52) obtenus au moyen de plusieurs détecteurs (D1 à D52) ;
- générer au moins un signal incrémentiel (IN, IN0, IN90, IN180, IN270, IN120, IN240, BND, BN90) à partir des signaux de balayage (A1 à A52),

**caractérisé en ce que**

- pour générer ledit au moins un signal incrémentiel (IN, IN0, IN90, IN180, IN270, IN120, IN240, BN0, BN90), les signaux de balayage (A1 à A52) obtenus aux positions de balayage dans la grille d'espacement B sont convertis en des signaux partiels périodiques (TA1 à TA36) par sections, et **en ce que** lesdits signaux partiels (TA1 à TA36) sont sommés, dans lequel les signaux partiels (TA1 à TA36) sont générés en comparant chacun des signaux de balayage (A1 à A16) à un signal de balayage (A1 à A16) d'au moins un autre détecteur (D1 à D52) disposé à distance dans la direction de mesure X et en compensant par un calcul de valeur la différence générée par la comparaison.

8. Procédé selon la revendication 7, **caractérisé en ce que** plusieurs signaux de balayage (A21 à A32) sont dérivés de chaque élément de code (C21 à C23), lesquels signaux de balayage sont envoyés à un dispositif de sélection (18), qui sélectionne des signaux de balayage (A23, A27, A31) convenant pour générer le mot de code (CW) en fonction d'informations de position (D) dérivées du signal incrémentiel (IN).

9. Procédé selon l'une des revendications 7 ou 8, **caractérisé en ce qu'**au moins un signal incrémentiel périodique (BND, BN90) ayant une période de 2 x B est généré à partir des signaux partiels (TA11 à TA36).

10. Procédé selon l'une des revendications 7 à 9, **caractérisé en ce que** les signaux de balayage (A11 à A52) sont dérivés d'un code Manchester (101), dans lequel un bit du mot de code (CW) est généré par la comparaison de signaux de balayage (A11 à A52) de deux éléments de code (C1 à C28).

11. Procédé selon les revendications 9 et 10, **caractérisé en ce que** les signaux de balayage (A11 à A52) appropriés pour la comparaison sont déterminés à partir d'au moins un signal incrémentiel périodique (BNO, BN90) présentant la période 2 x B.

FIG. 1

EP 2 274 579 B1

FIG. 2a

FIG. 2b

FIG. 2c

# FIG. 3

# FIG. 4

FIG. 5

FIG. 6

EP 2 274 579 B1

**EP 2 274 579 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02084223 A1
- DE 4123722 A1
- EP 1329696 A1
- WO 0201160 A1
- WO 0006973 A1
- EP 1468254 B1